# NEUE EUROPÄISCHE PATENTSCHRIFT

(11) **EP 2 086 787 B2**
(45) Veröffentlichungstag und Bekanntmachung des Hinweises auf die Entscheidung über den Einspruch: **11.09.2019**
(45) Hinweis auf die Patenterteilung: 22.09.2010
(21) Anmeldenummer: 07819312.5
(22) Anmeldetag: 25.10.2007
(51) Int. Cl.: B60L 7/10, B60L 7/16, B60L 7/24, B60T 8/1761, H02P 3/26

(54) **ANTRIEBS- UND BREMSSYSTEM EINES SCHIENENFAHRZEUGS MIT GENERATORISCHER BREMSE UND ZUSÄTZLICHER REIBUNGSBREMSE**
DRIVE AND BRAKE SYSTEM OF A RAIL VEHICLE, COMPRISING A GENERATOR BRAKE AND AN ADDITIONAL FRICTION BRAKE
SYSTÈME D'ENTRAÎNEMENT ET DE FREINAGE POUR UN VÉHICULE À RAILS, COMPRENANT UN FREIN GÉNÉRATIF ET UN FREIN À FRICTION SUPPLÉMENTAIRE

(30) Priorität: 31.10.2006 DE 102006051318
(43) Veröffentlichungstag der Anmeldung: 12.08.2009
(73) Patentinhaber: KNORR-BREMSE Systeme für Schienenfahrzeuge GmbH, 80809 München (DE)
(72) Erfinder: FRIESEN, Ulf, 85579 Neubiberg (DE); HÄHLE, Falk, 82110 Germering (DE); SCHMUCKER, Josef, 82049 Pullach (DE)
(74) Vertreter: Wiedemann, Markus
(86) Internationale Anmeldenummer: PCT/EP2007/009260
(87) Internationale Veröffentlichungsnummer: WO 2008/052695

(56) Entgegenhaltungen:
- EP-A- 1 321 330
- WO-A1-03/050940
- DE-A1- 10 301 947
- JP-A- 10 271 608
- US-A1- 2006 100 057
- JÖCKEL, A. ET AL: "SYNTEGRA - Innovatives Triebfahrwerk mit Direktantrieben", ZEVRAIL, 20060909
- JÖCKEL, A. ET AL: "SYNTEGRA - Innovativer Prototyp einer nächsten Triebfahrwerk-Generation", Fahrzeugtechnik, vol. 104, no. 8-9, 2006,

## Beschreibung

### Stand der Technik

Die Erfindung geht aus von einem Antriebs- und Bremssystem eines Schienenfahrzeugs oder eines Schienenfahrzeugzuges beinhaltend einen Traktionsantrieb zum Antreiben und zum generatorischen Bremsen, gemäß dem Oberbegriff von Anspruch 1.

Ziel in der Ausrüstung von Schienenfahrzeugen ist es, immer effektivere und leichtere Antriebsmaschinen einzusetzen. Als Standardantriebsmaschine wird heute die umrichtergespeiste Asynchronmaschine verwendet. Diese Maschine bietet aber wenig Potential zur Weiterentwicklung in Bezug auf Masseverringerung und Drehmomentdichte und bedingt in ihrer Anwendung bei Schienenfahrzeugen meist ein Getriebe. Deswegen sind derzeit immer mehr Bestrebungen zu erkennen, permanenterregte Synchronmaschinen als Fahrzeugantriebe zu entwickeln und einzusetzen. Diese Maschinenart ermöglicht durch ihre hohe Drehmomentdichte die Realisierung von Direktantrieben und erzielt vor allem durch den Entfall des Getriebes eine sehr hohe Reduzierung der Masse des Antriebsstrangs.

Die permanent erregte Synchronmaschine weist auf Grund ihrer permanenten Erregung einige Besonderheiten im Vergleich zur Asynchrontechnik auf. So ist es z.B. möglich, bei einer rotierenden Maschine zusätzlich zum umrichtergeregelten Generatorbetrieb mit rein passiven Bauteilen eine Bremswirkung zu erzielen. Die durch eine permanent erregte Synchronmaschine erzeugte Bremswirkung durch eine Beschaltung von Bremswiderständen ist aus der DE 101 60 612 A1 bekannt.

Bei der Aufschaltung der rotierenden permanent erregten Synchronmaschine mit Bremswiderständen ergibt sich in Abhängigkeit von der Drehzahl des Synchronmotors und damit auch von der Fahrzeuggeschwindigkeit eine charakteristische Momenten- bzw. Kraftkennlinie, die im weiteren auch als natürliche Bremskennlinie bezeichnet wird. Diese Bremskennlinie besitzt im Verlauf über der Drehzahl/Geschwindigkeit ein Maximum.

Problematisch bei der Anwendung der generatorischen Bremswirkung eines permanent erregten Synchronmotors ist daher, dass die natürliche Bremskennlinie keinen konstanten Bremsmomentenverlauf über der Drehzahl aufweist. Die Problemstellung bei der Anwendung der passiven Bremswirkung eines permanent erregten Synchronmotors ergibt sich daraus, dass die Bremswirkung der natürlichen Bremskennlinie bei sehr niedrigeren und sehr hohen Drehzahlen bzw. Geschwindigkeiten nachlässt. Besonders im Bereich sehr niedriger Geschwindigkeiten geht die Bremskraft gegen Null, so dass das Fahrzeug nicht bis zum Stillstand abgebremst werden kann. Weiterhin ist im Stillstand keine Bremswirkung vorhanden, so dass die Gefahr des Abrollens im Gefälle besteht. Das gleiche gilt auch bei Ausfall des permanent erregten Synchronmotors, z. B. durch Leitungsunterbrechung.

Ein gattungsbildendes Antriebs- und Bremssystem eines Fahrzeugs ist in der EP 1 321 330 A2 offenbart, bei welchem beim generatorischen Bremsen mit rein passiven Bauteilen (natürliche Bremskennlinie) abhängig vom Wert der Drehzahl des permanent erregten Synchronmotors und/oder vom Wert wenigstens einer auf dieser Drehzahl basierenden Größe wenigstens eine Reibungsbremse aktiviert oder deaktiviert wird.

Der Erfindung liegt die Aufgabe zugrunde, das oben beschriebene Antriebs- und Bremssystem eines Fahrzeugs derart weiter zu bilden, dass das von dem Synchronmotor aufgebrachte Bremsmoment möglichst hoch ist, um den Verschleiß der Reibungsbremse zu reduzieren.

Erfindungsgemäß wird diese Aufgabe durch die Merkmale der Patentansprüche 1, 2 und 4 gelöst.

### Offenbarung der Erfindung

Beim generatorischen Bremsen mit rein passiven Bauteilen (natürliche Bremskennlinie) wird abhängig vom Wert der Drehzahl des permanent erregten Synchronmotors und/oder vom Wert wenigstens einer auf dieser Drehzahl basierenden Größe wenigstens eine Reibungsbremse aktiviert oder deaktiviert. Mit anderen Worten wird drehzahlabhängig die Bremswirkung der wenigstens einen Reibungsbremse zu- oder weggeschaltet. Damit kann die bei der Drehzahl Null, bei sehr niedrigen oder bei sehr hohen Drehzahlen bauartbedingte Bremsmomentschwäche eines permanent erregten Synchronmotors kompensiert werden. Beispielsweise wird die zusätzlichen Bremse, insbesondere eine elektro-pneumatischen Reibungsbremse zugeschaltet, wenn der permanent erregte Synchronmotor im Rahmen der generatorischen Bremse innerhalb eines Drehzahlbereichs gefahren wird, welcher unterhalb der Drehzahl liegt, in dem er sein Bremsmomentmaximum erreicht. Umgekehrt ist denkbar, dass die Reibungsbremse drehzahlabhängig wieder weggeschaltet wird, wenn der permanent erregte Synchronmotor zum generatorischen Bremsen in einem Drehzahlbereich betrieben wird, in dem die Reibungsbremse als zusätzliche Bremse zum Erzielen einer ausreichenden Bremswirkung nicht (mehr) notwendig ist.

Vorteilhaft ist hierbei insbesondere, dass eine solche drehzahlabhängige Zu- oder Wegschaltung einer Reibungsbremse in Bezug zur generatorischen Bremse durch einfache Mittel erfolgen kann und hierzu insbesondere keine Regelung verwendet wird, die abhängig von einer Sollwertvorgabe für das Bremsmoment die Zu- oder Wegschaltung der Reibungsbremse regelt. Vielmehr erfolgt die Zu- oder Wegschaltung der Reibungsbremse lediglich abhängig von der Drehzahl des permanent erregten Synchronmotors oder einer auf dieser Drehzahl basierenden Größe im Rahmen einer einfachen Steuerung und kann durch einfache Vergleichs- und Schaltmittel realisiert werden.

Bei geeigneter Wahl der auf der Drehzahl basierenden Größe ist es zusätzlich möglich, einen Ausfall des permanent erregten Synchronmotors durch die

Reibungsbremse zu kompensieren. Beispielsweise im Fall einer Unterbrechung der Lastbeschaltung oder eines Wicklungsschlusses des permanent erregten Synchronmotors fällt der die Lastschaltung durchfließende elektrische Strom I und/oder die an den Klemmen des permanent erregten Synchronmotors induzierte Spannung U unter einen kritischen Wert Iₖᵣᵢₜ bzw. Uₖᵣᵢₜ, so dass in diesem Fall die Reibungsbremse zugeschaltet wird.

Um dem Zeitverhalten der generatorischen Bremse Rechnung zu tragen, sind Mittel vorgesehen, durch welche eine vom Wert der Drehzahl des permanent erregten Synchronmotors oder vom Wert der wenigstens einen auf dieser Drehzahl basierenden Größe abhängige Zuschaltung der wenigstens einen Reibungsbremse zu der Bremswirkung des permanent erregten Synchronmotors erst dann erfolgen kann, wenn wenigstens eine zum Aufbau eines in Bezug zur jeweiligen Drehzahl maximal möglichen Bremsmoments durch den permanent erregten Synchronmotor notwendige Zeitdauer vergangen ist.

Die auf der Drehzahl des permanent erregten Synchronmotors basierende Größe wird durch den die Lastschaltung durchfließenden elektrischen Strom I und/oder durch die an den Klemmen des permanent erregten Synchronmotors induzierte Spannung U gebildet. Denn diese Größen hängen unmittelbar von der Drehzahl n des permanent erregten Synchronmotors ab und ändern sich mit dieser. Sie sind insbesondere von einer einfachen Messeinrichtung detektier- und auswertbar.

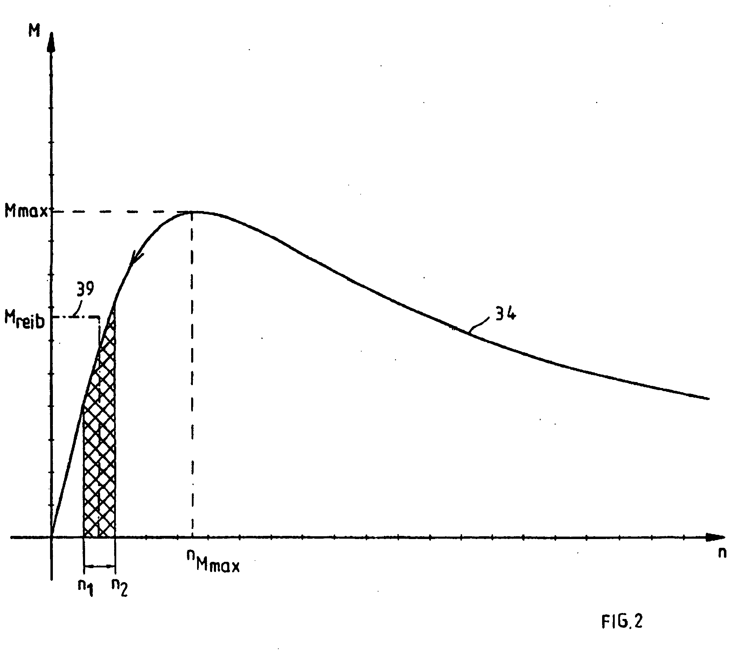

Zusätzlich kann als auf der Drehzahl n des permanent erregten Synchronmotors basierende Größe auch das vom permanent erregten Synchronmotor gelieferte Drehmoment M herangezogen werden, dessen Abhängigkeit von der Drehzahl n in Fig. 2 als natürliche Bremskennlinie dargestellt ist. Fällt beispielsweise das vom permanent erregten Synchronmotor gelieferte Drehmoment M unter einen kritischen Drehmomentwert Mₖᵣᵢₜ ab, so deutet dies entweder auf einen Ausfall des permanent erregten Synchronmotors (M = 0) oder auf einen Betrieb in einem Drehzahlbereich hin, in welchem das Drehmoment nicht ausreichend ist. Dies ist besonders im Hinblick auf den vorliegenden Fall maßgebend, in welchem die auf dem permanent erregten Synchronmotor basierende generatorische Bremse und die erforderlichenfalls zugeschaltete Reibungsbremse eine Sicherheits- oder Notbremse darstellen, die einer Betriebsbremse als Sicherungsebene unterlegt ist. Denn dann ist die Funktion der Sicherheits- oder Notbremse bei Ausfall der generatorischen Bremse durch die dann einspringende Reibungsbremse gesichert.

Die zusätzliche Reibungsbremse wird zugeschaltet, wenn der Wert der auf der Drehzahl des permanent erregten Synchronmotors basierenden Größe einen vorbestimmten Grenzwert überschreitet bzw. wenn Letzterer einen vorbestimmten Grenzwert unterschreitet. Insbesondere ist die Bremswirkung der wenigstens einen zusätzlichen Reibungsbremse zuschaltbar, wenn der Wert der auf dieser Drehzahl basierenden Größe in ein vorbestimmtes Intervall fällt. Die Größe dieses Intervalls wird vom Fachmann nach Bedarf festgelegt.

Bevorzugt liegt dieses Intervall für die Drehzahl bzw. für die auf der Drehzahl basierenden Größe unterhalb eines Drehzahlwerts oder eines Werts der auf dieser Drehzahl basierenden Größe, welchem ein Maximalwert des vom permanent erregten Synchronmotors erzeugten Bremsmoments zugeordnet ist. Gelangt daher die Drehzahl des Synchronmotors bzw. die auf der Drehzahl basierende Größe durch einen Bremsvorgang von höheren Werten her in dieses Intervall, wird die Reibungsbremse zugeschaltet und kompensiert die Bremsmomentschwäche bei niedrigen Drehzahlen des Synchronmotors, d.h. von diesem Intervall bis zur Drehzahl Null, so dass zum einen das Bremsmoment erhöht und zum andern das Schienenfahrzeug erfolgreich am Wegrollen gehindert wird.

Die auf dem permanent erregten Synchronmotor basierende generatorische Bremse und die erforderlichenfalls zugeschaltete Reibungsbremse bildet eine Sicherheits- oder Notbremse, die einer Betriebsbremse als Sicherungsebene unterlegt ist.

Zur Realisierung der Sicherheits- oder Notbremse wirken die generatorische Bremse und die Reibungsbremse mit einer Sicherheitsschleife des Schienenfahrzeugs oder des Schienenfahrzeugzuges derart zusammen, dass nach Über- oder Unterschreiten eines Grenzwerts durch eine entlang der Sicherheitsschleife geführten Größe der permanent erregte Synchronmotor der Lastschaltung zugeschaltet und erforderlichenfalls die Reibungsbremse aktiviert wird.

Die genaue Funktionsweise des erfindungsgemäßen Antriebs- und Bremssystems wird anhand der nachfolgenden Beschreibung eines Ausführungsbeispiels klar.

### Zeichnungen

Ein Ausführungsbeispiel der Erfindung ist in der Zeichnung dargestellt und in der nachfolgenden Beschreibung näher erläutert. In der Zeichnung zeigt:
- Fig.1: eine schematische Darstellung eines Traktionsantriebs für ein Wechselstromfahrzeug beinhaltend einen permanent erregten Synchronmotor gemäß einer Ausführungsform der Erfindung;
- Fig.2: eine Bremskennlinie des permanent erregten Synchronmotors von Fig.1 im generatorischen Betrieb;
- Fig.3: eine schematische Darstellung einer Sicherheitsschleife zur Aktivierung einer Sicherheits- oder Notbremse beinhaltend den permanent erregten Synchronmotors von Fig.1.

### Beschreibung des Ausführungsbeispiels

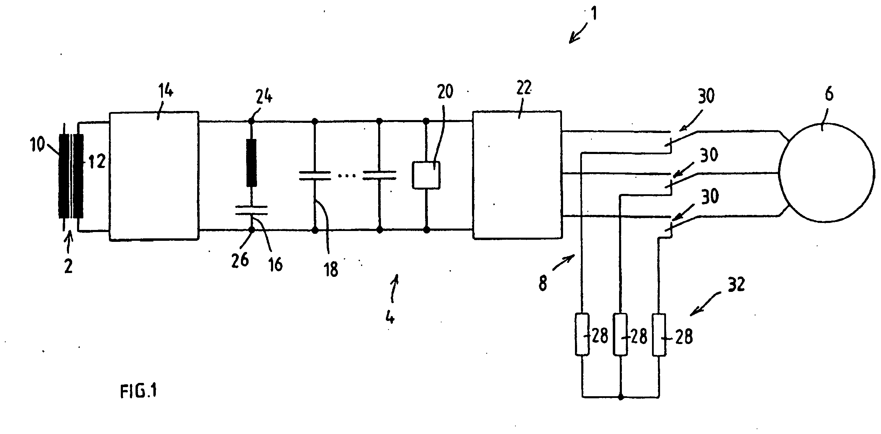

In der Fig.1 ist ein Traktionsantrieb 1 für ein Wechselstromfahrzeug, auch als AC-Schienenfahrzeug bezeichnet, näher dargestellt, wobei mit 2 ein Traktionstransformator, mit 4 ein Traktionsstromrichter, mit 6 ein permanenterregter Synchronmotor und mit 8 eine Bremseinrichtung gekennzeichnet sind. Der Traktionstransformator 2 weist eine Primärwicklung 10 und mehrere Sekundärwicklungen 12 auf, von denen hier nur eine Sekundärwicklung 12 dargestellt ist. Der Traktionsstromrichter 4 weist einen Vierquadranten-Steller 14, einen Saugkreis 16, eine Kondensatorbatterie 18, eine Überspannungs-Schutzeinrichtung 20 und einen maschinenseitigen Pulsstromrichter 22 auf. Der Vierquadranten-Steller 14 ist wechselspannungsseitig mit der Sekundärwicklung 12 des Traktionstransformators 2 verknüpft und gleichspannungsseitig elektrisch parallel geschaltet. Elektrisch parallel zu den beiden gleichspannungsseitigen Anschlüssen 24 und 26 dieser Einspeiseschaltung sind der Saugkreis 16, die Kondensatorbatterie 18, die Überspannungs-Schutzeinrichtung 20 und die gleichspannungsseitigen Eingangsanschlüsse des maschinenseitigen Pulsstromrichters 22 geschaltet. Ausgangsseitig ist der maschinenseitige Pulsstromrichter 22 mit Anschlüssen des permanenterregten Synchronmotors 6 verbindbar.

Die Bremseinrichtung 8 besteht pro Phase des permanenterregten Synchronmotors 6 aus einem Bremswiderstand 28 und einem Umschalter 30. Diese Bremswiderstände 28 sind elektrisch beispielsweise in Stern geschaltet und weisen beispielsweise jeweils einen konstanten Widerstandswert auf. Alternativ ist auch eine Dreieckschaltung denkbar. Die Umschalter 30 sind derartig mit den Ausgängen des maschinenseitigen Pulsstromrichters 22 und den Eingängen des permanenterregten Synchronmotors 6 verknüpft, so dass die Eingänge des permanenterregten Synchronmotors 6 einerseits mit dem Bremswiderstand 28 und andererseits mit den Ausgängen des maschinenseitigen Pulsstromrichters 22 verbindbar sind.

Diese Umschalter 30, die auch als Fail-Safe-Schalter bezeichnet werden, können elektrisch oder mechanisch oder pneumatisch betätigt werden. Sobald diese Umschalter 30 von der Betriebsstellung "Fahren", d.h., die Klemmen des permanenterregten Synchronmotors 6 sind mit den Ausgängen des maschinenseitigen Pulsstromrichters 22 verbunden, in die Betriebsstellung "Bremsen", d.h., die Klemmen des permanenterregten Synchronmotors 6 sind mit einer Lastschaltung 32 in Form der beispielsweise in Stern geschalteten Bremswiderstände 28 verbunden, gelangt, erzeugt der permanenterregte Synchronmotor 6 ein Bremsmoment, das sich mit der Verringerung der Geschwindigkeit des Schienenfahrzeugs entsprechend dem Verlauf der Bremskennlinie verändert. Zur Erzeugung des Bremsmoments wird weder der maschinenseitige Pulsstromrichter 22 noch irgendeine Regelung benötigt.

Ein solcher Traktionsantrieb 1 ist in der eingangs erwähnten DE 101 60 612 A1 ausführlich beschrieben. Deshalb soll hier nicht weiter darauf eingegangen werden.

Neben Widerständen 28 oder anstatt solcher kann die Lastschaltung 32 auch andere passive elektronische Bauelemente wie Kondensatoren und/oder Induktivitäten beispielsweise in Form von Drosselspulen enthalten. Bei einer Parallelschaltung von Widerstand 28 und Kondensator wird beispielsweise das Maximum des Bremsmoments Mₘₐₓ erhöht. Demgegenüber kann durch eine in Reihe zum Widerstand 28 geschaltete Induktivität das Maximum des Bremsmoments Mₘₐₓ des permanent erregten Synchronmotors 6 verringert werden. Generell ist eine Vielzahl von Lastschaltungen 32 denkbar, sei es durch Variation der Widerstands-, Kapazitäts- oder Induktivitätswerte und/oder durch Variation der Verschaltung der einzelnen Bauelemente (parallel oder seriell).

Wenigstens einer Achse des AC-Schienenfahrzeugs ist ein solcher permanenterregter Synchronmotor 6 mit Traktionsstromrichter 4 und den weiteren Bauelementen gemäß Fig.1 zugeordnet. Dabei bilden die Bremswiderstände 28 die dem Synchronmotor 6 zugeordnete Lastschaltung 32, auf welche er zum generatorischen Bremsen durch den Umschalter 30 geschaltet wird. Im generatorischen Bremsbetrieb weist ein solcher Synchronmotor 6 eine Bremskennlinie 34 auf, wie sie beispielsweise in Fig.2 dargestellt ist. Unter einer Bremskennlinie 34 wird im folgenden der Verlauf des Bremsmoments M oder der Bremskraft F über der Drehzahl n des Synchronmotors 6 verstanden, welche im vorliegenden Fall des Direktantriebs mit der Achsdrehzahl identisch ist. Diese Achsdrehzahl ist proportional zur Fahrgeschwindigkeit des AC-Schienenfahrzeugs. Wie anhand von Fig.2 zu erkennen ist, steigt das Bremsmoment M mit von Null größer werdender Drehzahl n zunächst steil an, um nach Erreichen eines Maximalwerts Mₘₐₓ wieder abzufallen. Diesem maximalen Bremsmoment Mₘₐₓ ist eine Drehzahl n_{Mmax} zugeordnet. Dies stellt einen typischen Verlauf einer Bremskennlinie 36 eines permanent erregten Synchronmotors 6 dar, dem im generatorischen Bremsbetrieb eine Lastschaltung 32 mit Bremswiderständen 28 zugeschaltet ist.

Um die bei der Drehzahl Null, bei sehr niedrigen oder bei sehr hohen Drehzahlen n bauartbedingte Bremsmomentschwäche des permanent erregten Synchronmotors 6 zu kompensieren, wird beim generatorischen Bremsen abhängig vom Wert der Drehzahl n des permanent erregten Synchronmotors 6 oder vom Wert wenigstens einer auf dieser Drehzahl n basierenden Größe wenigstens eine Reibungsbremse 36 aktiviert oder deaktiviert, wobei unter Aktivieren ein Zuspannen der Reibungsbremse 36 und unter Deaktivieren ein Lösen der Reibungsbremse 36 zu verstehen ist.

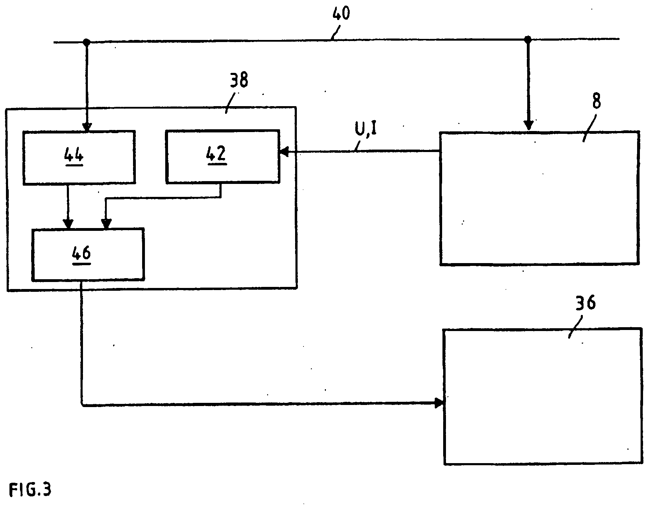

Bevorzugt wird die auf der Drehzahl n des permanent erregten Synchronmotors 6 basierende Größe durch den die Lastschaltung 32 durchfließenden elektrischen Strom I und/oder durch die an dessen Klemmen induzierte Spannung U gebildet. Denn diese Größen U, I hängen unmittelbar von der Drehzahl n des permanent erregten Synchronmotors 6 ab und ändern sich mit dieser. Diese Größen U, I werden von einer kombinierten Mess- und Schalteinrichtung 38 erfasst (Fig.3), welche von der Bremseinrichtung 8 abgegriffen werden.

Alternativ oder zusätzlich kann als auf der Drehzahl n des permanent erregten Synchronmotors basierende Größe auch das vom permanent erregten Synchronmotor 6 gelieferte Drehmoment M herangezogen werden, dessen Abhängigkeit von der Drehzahl n in Fig.2 als natürliche Bremskennlinie dargestellt ist. Fällt beispielsweise das vom permanent erregten Synchronmotor 6 gelieferte Drehmoment M unter einen kritischen Drehmomentwert Mₖᵣᵢₜ ab, so deutet dies entweder auf einen Ausfall des permanent erregten Synchronmotors (M = 0) oder auf einen Betrieb in einem Drehzahlbereich hin, in welchem das Drehmoment nicht ausreichend ist.

Bevorzugt wird als Reibungsbremse eine elektro-pneumatische, alternativ auch eine elektro-hydraulische oder elektro-mechanische Reibungsbremse 36 zugeschaltet, wenn die Drehzahl n des permanent erregten Synchronmotors 6 im Rahmen der generatorischen Bremse ausgehend von höheren Werten (siehe Pfeil in Fig.2) in ein Drehzahlintervall n₁, n₂ gelangt, welches unterhalb der Drehzahl n_{Mmax} liegt, bei welcher er sein Bremsmomentmaximum Mₘₐₓ erreicht, wie Fig.2 veranschaulicht. Die Reibungsbremse 36 bleibt dann aktiv, bis die Drehzahl n den Wert Null erreicht hat, wie die strichpunktiert dargestellte Bremskennlinie 39 der Reibungsbremse in Fig.2 veranschaulicht. Diese Reibungsbremse sorgt insbesondere für ein zusätzliches, konstantes Bremsmoment M_{reib}, das dem bei der jeweiligen Drehzahl n gerade vorliegenden Bremsmoment M der generatorischen Bremse 8 durch Addition überlagert wird.

Ein niedriges Bremsmoment M der generatorischen Bremseinrichtung 8 bedingt eine niedrige induzierte Spannung U an den Motorklemmen und damit bei den angeschlossenen passiven Beschaltungselementen 28 einen niedrigen Strom I. Übertragen auf die auf der Drehzahl n des permanent erregten Synchronmotors 6 basierenden Größen U und I bedeutet dies, dass ein Einsatz der elektro-pneumatischen Bremse 36 so lange unterbunden wird, wie die elektrische Größe U und/oder der Strom I über einem Mindestwert oder, analog zum Drehzahlintervall n₁, n₂ über einem entsprechenden Intervall liegt, d.h. jeweils größer ist. Demgegenüber wird die elektropneumatische Bremse 36 ausgelöst, falls die Spannung U und/oder der Strom I unter diesen Mindestwert bzw. in das Intervall fällt.

Bevorzugt stellt das generatorische Bremsen durch den permanent erregten Synchronmotor 6 und die erforderlichenfalls zugeschaltete Reibungsbremse 38 eine Sicherheits- oder Notbremse dar, die einer Betriebsbremse des AC-Schienenfahrzeugs als Sicherungsebene unterlegt ist. Diese Betriebsbremse kann wiederum eine generatorische Bremse sein.

Zur Realisierung der Sicherheits- oder Notbremse kann der Traktionsantrieb 1 mit einer Sicherheitsschleife 40 des AC-Schienenfahrzeugs derart zusammenwirken, dass nach Über- oder Unterschreiten eines Grenzwerts durch eine entlang der Sicherheitsschleife 40 geführten Größe, beispielsweise durch eine Sicherheitsschleifenspannung U_{S} der permanent erregte Synchronmotor 6 der Lastschaltung 32 zugeschaltet wird, um die generatorische Bremse als Sicherheits- oder Notbremse zu aktivieren.

Um dem Zeitverhalten der generatorischen Bremse Rechnung zu tragen, erfolgt eine vom Wert der Drehzahl n des permanent erregten Synchronmotors 6 oder vom Wert der auf dieser Drehzahl basierenden Größen U, I abhängige Zuschaltung der elektro-pneumatischen Reibungsbremse 36 zu der Bremswirkung des permanent erregten Synchronmotors 6 erst dann, wenn eine zum Aufbau eines Bremsmoments M durch den permanent erregten Synchronmotor 6 notwendige Zeitdauer vergangen ist.

Nach dem Auslösen der Sicherheits- oder Notbremse wird die gegebenenfalls erforderliche Auslösung der Reibungsbremse 36 um eine gewisse Zeit verzögert (Ausgleich der Schaltzeitverzögerung, Stromaufbauzeit usw.). In dieser Zeit baut die den permanent erregten Synchronmotor 6 beinhaltende Bremseinrichtung 8 das Bremsmoment M auf. Nach der Verzögerungszeit wird die Reibungsbremse 36 aktiviert, falls z.B. die von der Bremseinrichtung 8 induzierte Spannung U unter einem kritischen Grenzwert U_{grenz} liegt oder sobald sie unter diesen Grenzwert U_{grenz} abfällt.

Gemäß der Schaltung von Fig.3 wird dies dadurch realisiert, dass zunächst der Wert der Sicherheitsschleifenspannung U_{S} von der kombinierten Mess- und Schalteinrichtung 38 ständig überwacht wird. Weiterhin erhält auch die Bremseinrichtung 8 ständig diesen Wert von der Sicherheitsschleife 40.

Diese Sicherheitsschleifenspannung U_{S} entspricht beispielsweise einer Batteriespannung U_{batt}, welche durch einen im Fahrerhaus angeordneten Notschlagknopf vom Fahrer durch Trennen der Sicherheitsschleife 40 beispielsweise zum Auslösen einer Notbremsung zu Null gesetzt wird. Weiterhin wird diese Sicherheitsschleifenspannung U_{S} auch dann zu Null gesetzt, wenn die vorrangige Betriebsbremse ausfällt und die generatorische Bremse 8 erforderlichenfalls zusammen mit der Reibungsbremse 36 als unterlegte Sicherheitsebene aktiviert werden muss. Dies kann beispielsweise durch Betätigung des Notschlagknopfes durch den Fahrer erfolgen oder aber auch automatisch durch eine entsprechende Steuerung, welche einen Ausfall der Betriebsbremse detektieren kann.

Ein Verzögerungsglied 44 der kombinierten Mess- und Schalteinrichtung 38 verarbeitet den momentanen Wert der Sicherheitsschleifenspannung U_{S} zeitverzögert, um entweder ein "JA" für das Trennen der Sicherheitsschleife 40, d.h. für ein Auslösen einer Notbremsung oder einen Ausfall der Betriebsbremse zu signalisieren, oder ein "NEIN" für eine funktionsfähige Betriebsbremse oder keine Auslösung der Notbremse an den einen Eingang eines "UND"-Glieds 46 zu liefern.

Weiterhin werden die von der Bremseinrichtung 8 stammenden Größen U, I einer kombinierten Bewerter-/Komparatoreinheit 42 der kombinierten Mess- und Schalteinrichtung 38 zugeführt. Diese Einheit 42 vergleicht den Wert von U und/oder I mit einem vorgegebenen Grenzwert, um zu entscheiden, ob eine Zuschaltung der Reibungsbremse 36 notwendig ist oder nicht. Falls ja, erzeugt die Bewerter-/Komparatoreinheit 42 an ihrem Ausgang bzw. an dem weiteren Eingang des "UND"-Glieds 46 ein "JA", falls nicht ein "NEIN".

Das "UND"-Glied 46 schaltet schließlich ein Auslösesignal auf die Reibungsbremse 36 zu deren Aktivierung, falls an seinen beiden Eingängen ein "JA" ansteht, andernfalls wird ein solches Auslösesignal nicht erzeugt und die Reibungsbremse nicht aktiviert.

Falls die Betriebsbremse funktionsfähig ist und auch keine Sicherheits- oder Notbremsung angefordert wird, steht die Sicherheitsschleife 40 unter einer von Null verschiedenen Sicherheitsschleifenspannung U_{S}. Dann bleibt die in der generatorischen Bremseinrichtung 8 vorhandene Schalteinrichtung 32 in Stellung "Fahren" geschaltet, in welcher der permanent erregte Synchronmotor 6 keine Spannung U induziert bzw. kein Strom I durch die Lastschaltung 32 fließt. Der Vergleich der Spannung U in der Bewerter-/Komparatoreinheit 42 mit einer vorgegebenen Grenzspannung U_{grenz} ergibt folglich : U < U_{grenz}. Da für diese Bedingung eigentlich die Reibungsbremse zugeschaltet werden müsste, steht am Ausgang der Bewerter-/Komparatoreinheit 42 ein "JA" an. Demgegenüber steuert das Verzögerungsglied 44 ein "NEIN" aus, da sich die Sicherheitsschleifenspannung U_{S} nicht geändert hat. Im Ergebnis steuert das "UND"-Glied 46 folglich kein Auslösesignal für die Reibungsbremse 36 aus.

Bei Anforderung einer Sicherheits- oder Notbremsung oder bei Ausfall der Betriebsbremse ändert sich die Sicherheitsschleifenspannung U_{S} charakteristisch, beispielsweise wird sie gleich Null, was als Auslösesignal für die Sicherheits- oder Notbremse interpretiert wird und in der Bremseinrichtung 8 dafür sorgt, dass die Schalteinrichtung 32 von der Betriebsart "Fahren" in die Betriebsart "Bremsen" umschaltet und erst nach einer gewissen Verzögerungszeit, welche zum Aufbau des aufgrund der momentan vorliegenden Drehzahl n möglichen Bremsmoments M notwendig ist, eine Spannung U induziert bzw. einen Strom I liefert. Die Bewerter-/Komparatoreinheit 42 liefert daher ein "JA", weil die induzierte Spannung U zu Beginn des Bremsvorgangs noch sehr klein ist und gilt : U < U_{grenz}.

Demgegenüber liegt am Eingang des Verzögerungsglieds 44 zwar keine Sicherheitsschleifenspannung U_{S} mehr an, weil diese durch Betätigung des Notschlagknopfes zu Null gesetzt wurde, jedoch aufgrund der Zeitverzögerung an seinem Ausgang zunächst immer noch ein "NEIN".

Das "UND-Glied" 46, an dessen Eingängen folglich ein "JA" von der Bewerter-/Komparatoreinheit 42 und ein "NEIN" vom Verzögerungsglied 44 ansteht, liefert folglich kein Auslösesignal für die Reibungsbremse 36.

Nachdem eine gewisse Zeitdauer Δt vergangen ist, die ausreicht, bis beispielsweise die vom permanent erregten Synchronmotor induzierte Spannung U auf einen Wert größer als U_{grenz} hat anwachsen lassen und folglich gilt : U > U_{grenz} liefert nun die Bewerter-/Komparatoreinheit 42 ein "NEIN". Im Drehzahldiagramm gemäß Fig.2 bedeutet dies, dass die Drehzahl n des permanent erregten Synchronmotors noch oberhalb des Intervalls n₁, n₂ liegt. Zwischenzeitlich, d.h. nach Ablauf von Δt steht am Ausgang des Verzögerungsglieds 44 ein "JA" an, so dass das "UND-Glied" 46 wiederum kein Auslösesignal für die Reibungsbremse 36 liefert.

Erst bei einem Abfall der vom permanent erregten Synchronmotor 6 induzierten Spannung U unter die Grenzspannung U_{grenz} (U < U_{grenz}) bzw. wenn die Drehzahl n im Verlauf des Bremsvorgangs von oben her in das Intervall n₁, n₂ fällt und das Bremsmoment M folglich zu klein wird (vgl. Fig.2), wird am Ausgang der Bewerter-/Komparatoreinheit 42 ein "JA" generiert, welches zusammen mit dem weiterhin vorhandenen "JA" des Verzögerungslieds 44 im "UND"-Glied 46 die Bildung des Auslösesignals für die Reibungsbremse 36 hervorruft, welche dann die generatorische Bremseinrichtung 8 in der oben beschriebenen Weise unterstützt.

Die Erfindung ist nicht auf Traktionsantriebe von Fahrzeugen beschränkt, die von einem Wechselstromkreis gespeist werden, sondern kann auch bei Traktionsantrieben von Fahrzeugen mit permanent erregten Synchronmotoren angewendet werden, die von einem Gleichstromnetz gespeist werden, wie sie beispielsweise in der DE 101 60 612 A1 beschrieben sind.

### Bezugszahlenliste

- 1: Traktionsantrieb
- 2: Traktionstransformator
- 4: Traktionsstromrichter
- 6: Synchronmotor
- 8: Bremseinrichtung
- 10: Primärwicklung
- 12: Sekundärwicklung
- 14: Vierquadranten-Steller
- 16: Saugkreis
- 18: Kondensatorbatterie
- 20: Überspannungs-Schutzeinrichtung
- 22: Pulstromrichter
- 24: Anschluss
- 26: Anschluss
- 28: Bremswiderstand
- 30: Umschalter
- 32: Lastschaltung
- 34: Bremskennlinie
- 36: Reibungsbremse
- 38: Mess- und Schalteinrichtung
- 39: Bremskennlinie
- 40: Sicherheitsschleife
- 42: Bewerter-/Komparatoreinheit
- 44: Verzögerungsglied
- 46: "UND"-Glied

## Patentansprüche

1. Antriebs- und Bremssystem eines Schienenfahrzeugs oder eines Schienenfahrzeugzuges beinhaltend einen Traktionsantrieb (1) zum Antreiben und zum generatorischen Bremsen, wobei wenigstens einer Achse des Schienenfahrzeugs oder des Schienenfahrzeugzuges wenigstens ein permanenterregter Synchronmotor (6) und ein Traktionsstromrichter (4) zugeordnet ist und wobei der Traktionsstromrichter (4) wenigstens einen maschinenseitigen Pulsstromrichter (22) aufweist und der permanenterregte Synchronmotor (6) an seinen Klemmen mit einem Umschalter (30) derart verbunden ist, dass der permanenterregte Synchronmotor (6) zum Antreiben dem Pulsstromrichter (22) oder zum generatorischen Bremsen einer Lastschaltung (32) beinhaltend wenigstens ein Lastelement (28) zugeschaltet wird, wobei beim generatorischen Bremsen abhängig vom Wert wenigstens einer auf der Drehzahl (n) des permanent erregten Synchronmotors (6) basierenden Größe (U, I) zusätzlich wenigstens eine Reibungsbremse (36) aktiviert oder deaktiviert wird, **dadurch gekennzeichnet, dass**
a) die generatorische Bremse durch den permanent erregten Synchronmotor (6) und erforderlichenfalls durch die zugeschaltete Reibungsbremse (36) eine Sicherheits- oder Notbremse bildet, die einer Betriebsbremse als Sicherungsebene unterlegt ist,
b) die generatorische Bremse (8) und die Reibungsbremse (36) mit einer Sicherheitsschleife (40) des Schienenfahrzeugs oder des Schienenfahrzeugzuges derart zusammenwirken, dass nach Über- oder Unterschreiten eines Grenzwerts durch eine entlang der Sicherheitsschleife (40) geführten Größe (Uₛ) der permanent erregte Synchronmotor (6) der Lastschaltung (32) zugeschaltet und erforderlichenfalls die Reibungsbremse (36) aktiviert wird, wobei
c) die zusätzliche Reibungsbremse (36) zuschaltbar ist, wenn der Wert der auf der Drehzahl (n) des permanent erregten Synchronmotors (6) basierenden Größe (U, I) einen vorbestimmten Grenzwert unterschreitet, wobei
d) die auf der Drehzahl (n) des permanent erregten Synchronmotors (6) basierende Größe der die Lastschaltung (32) durchfließende elektrische Strom (I) und/oder die an den Klemmen des permanent erregten Synchronmotors (6) induzierte Spannung (U) ist, und wobei
e) Mittel (42, 44, 46) vorgesehen sind, durch welche eine vom Wert der wenigstens einen auf der Drehzahl (n) des permanent erregten Synchronmotors (6) basierenden Größe (U, I) abhängige Zuschaltung der wenigstens einen Reibungsbremse (36) zu der Bremswirkung des permanent erregten Synchronmotors (6) erst dann erfolgen kann, wenn wenigstens eine zum Aufbau eines in Bezug zur jeweiligen Drehzahl (n) maximal möglichen Bremsmoments (M) durch den permanent erregten Synchronmotor (6) notwendige Zeitdauer (Δt) vergangen ist.

2. Antriebs- und Bremssystem eines Schienenfahrzeugs oder eines Schienenfahrzeugzuges beinhaltend einen Traktionsantrieb (1) zum Antreiben und zum generatorischen Bremsen, wobei wenigstens einer Achse des Schienenfahrzeugs oder des Schienenfahrzeugzuges wenigstens ein permanenterregter Synchronmotor (6) und ein Traktionsstromrichter (4) zugeordnet ist und wobei der Traktionsstromrichter (4) wenigstens einen maschinenseitigen Pulsstromrichter (22) aufweist und der permanenterregte Synchronmotor (6) an seinen Klemmen mit einem Umschalter (30) derart verbunden ist, dass der permanenterregte Synchronmotor (6) zum Antreiben dem Pulsstromrichter (22) oder zum generatorischen Bremsen einer Lastschaltung (32) beinhaltend wenigstens ein Lastelement (28) zugeschaltet wird, wobei beim generatorischen Bremsen abhängig vom Wert wenigstens einer auf der Drehzahl (n) des permanent erregten Synchronmotors (6) basierenden Größe (U, I) zusätzlich wenigstens eine Reibungsbremse (36) aktiviert oder deaktiviert wird, **dadurch gekennzeichnet, dass**
a) die generatorische Bremse durch den permanent erregten Synchronmotor (6) und erforderlichenfalls durch die zugeschaltete Reibungsbremse (36) eine Sicherheits- oder Notbremse bildet, die einer Betriebsbremse als Sicherungsebene unterlegt ist,
b) die generatorische Bremse (8) und die Reibungsbremse (36) mit einer Sicherheitsschleife (40) des Schienenfahrzeugs oder des Schienenfahrzeugzuges derart zusammenwirken, dass nach Über- oder Unterschreiten eines Grenzwerts durch eine entlang der Sicherheitsschleife (40) geführten Größe (Uₛ) der permanent erregte Synchronmotor (6) der Lastschaltung (32) zugeschaltet und erforderlichenfalls die Reibungsbremse (36) aktiviert wird, wobei
c) die Bremswirkung der wenigstens einen Reibungsbremse (36) zuschaltbar ist, wenn der Wert der auf der Drehzahl (n) des permanent erregten Synchronmotors (6) basierenden Größe (U, I) in ein vorbestimmtes Intervall fällt, wobei
d) die auf der Drehzahl (n) des permanent erregten Synchronmotors (6) basierende Größe der die Lastschaltung (32) durchfließende elektrische Strom (I) und/oder die an den Klemmen des permanent erregten Synchronmotors (6) induzierte Spannung (U) ist, und wobei
e) Mittel (42, 44, 46) vorgesehen sind, durch welche eine vom Wert der wenigstens einen auf der Drehzahl (n) des permanent erregten Synchronmotors (6) basierenden Größe (U, I) abhängige Zuschaltung der wenigstens einen Reibungsbremse (36) zu der Bremswirkung des permanent erregten Synchronmotors (6) erst dann erfolgen kann, wenn wenigstens eine zum Aufbau eines in Bezug zur jeweiligen Drehzahl (n) maximal möglichen Bremsmoments (M) durch den permanent erregten Synchronmotor (6) notwendige Zeitdauer (Δt) vergangen ist.

3. Antriebs- und Bremssystem nach Anspruch 2, **dadurch gekennzeichnet, dass** das Intervall für die auf der Drehzahl (n) basierenden Größe (U, I) unterhalb eines Werts (U_{Mmax}) der auf dieser Drehzahl (n_{Mmax}) basierenden Größe (U, I) liegt, welchem ein Maximalwert (Mₘₐₓ) des vom permanent erregten Synchronmotors (6) erzeugten Bremsmoments (M) zugeordnet ist.

4. Antriebs- und Bremssystem eines Schienenfahrzeugs oder eines Schienenfahrzeugzuges beinhaltend einen Traktionsantrieb (1) zum Antreiben und zum generatorischen Bremsen, wobei wenigstens einer Achse des Schienenfahrzeugs oder des Schienenfahrzeugzuges wenigstens ein permanenterregter Synchronmotor (6) und ein Traktionsstromrichter (4) zugeordnet ist und wobei der Traktionsstromrichter (4) wenigstens einen maschinenseitigen Pulsstromrichter (22) aufweist und der permanenterregte Synchronmotor (6) an seinen Klemmen mit einem Umschalter (30) derart verbunden ist, dass der permanenterregte Synchronmotor (6) zum Antreiben dem Pulsstromrichter (22) oder zum generatorischen Bremsen einer Lastschaltung (32) beinhaltend wenigstens ein Lastelement (28) zugeschaltet wird, wobei beim generatorischen Bremsen abhängig vom Wert der Drehzahl (n) des permanent erregten Synchronmotors (6) und/oder vom Wert wenigstens einer auf der Drehzahl (n) des permanent erregten Synchronmotors (6) basierenden Größe (U, I) zusätzlich wenigstens eine Reibungsbremse (36) aktiviert oder deaktiviert wird, **dadurch gekennzeichnet, dass**
a) die generatorische Bremse durch den permanent erregten Synchronmotor (6) und erforderlichenfalls durch die zugeschaltete Reibungsbremse (36) eine Sicherheits- oder Notbremse bildet, die einer Betriebsbremse als Sicherungsebene unterlegt ist,
b) die generatorische Bremse (8) und die Reibungsbremse (36) mit einer Sicherheitsschleife (40) des Schienenfahrzeugs oder des Schienenfahrzeugzuges derart zusammenwirken, dass nach Über- oder Unterschreiten eines Grenzwerts durch eine entlang der Sicherheitsschleife (40) geführten Größe (Uₛ) der permanent erregte Synchronmotor (6) der Lastschaltung (32) zugeschaltet und erforderlichenfalls die Reibungsbremse (36) aktiviert wird,
c) die zusätzliche Reibungsbremse (36) zuschaltbar ist, wenn der Wert der Drehzahl (n) des permanent erregten Synchronmotors (6) oder der Wert der auf der Drehzahl (n) des permanent erregten Synchronmotors (6) basierenden Größe (U, I) einen vorbestimmten Grenzwert überschreitet, wobei
d) die auf der Drehzahl (n) des permanent erregten Synchronmotors (6) basierende Größe der die Lastschaltung (32) durchfließende elektrische Strom (I) und/oder die an den Klemmen des permanent erregten Synchronmotors (6) induzierte Spannung (U) ist, und wobei
e) Mittel (42, 44, 46) vorgesehen sind, durch welche eine vom Wert der Drehzahl (n) des permanent erregten Synchronmotors (6) oder vom Wert der wenigstens einen auf der Drehzahl (n) des permanent erregten Synchronmotors (6) basierenden Größe (U, I) abhängige Zuschaltung der wenigstens einen Reibungsbremse (36) zu der Bremswirkung des permanent erregten Synchronmotors (6) erst dann erfolgen kann, wenn wenigstens eine zum Aufbau eines in Bezug zur jeweiligen Drehzahl (n) maximal möglichen Bremsmoments (M) durch den permanent erregten Synchronmotor (6) notwendige Zeitdauer (Δt) vergangen ist.

5. Antriebs- und Bremssystem nach einem der vorhergehenden Ansprüche, **dadurch gekennzeichnet, dass** die wenigstens eine Reibungsbremse (36) eine elektro-pneumatische, elektro-hydraulische, elektro-mechanische, pneumatische, mechanische oder hydraulische Reibungsbremse umfasst.

## Claims

1. Drive and brake system of a rail vehicle or a train of rail vehicles, comprising a traction drive (1) for driving and generator braking, wherein at least one permanently excited synchronous motor (6) and a traction current converter (4) are assigned to at least one axle of the rail vehicle or train of rail vehicles and wherein the traction current converter (4) comprises at least one machine-side pulse current converter (22) and the permanently excited synchronous motor (6) is at its terminals connected to a change-over switch (30) such that the permanently excited synchronous motor (6) is connected to the pulse current converter (22) for drive or to a load circuit (32) comprising at least one load element (28) for generator braking, wherein in the generator braking process at least one friction brake (36) is additionally enabled or disabled in dependence on a value of at least one variable (U, I) based on the speed (n) of the permanently excited synchronous motor (6), **characterised in that**
a) the generator brake forms, by way of the permanently excited synchronous motor (6) and, if required, the connected friction brake (36), a safety or emergency brake placed under a service brake as a protection level,
b) the generator brake (8) and the friction brake (36) interact with a safety loop (40) of the rail vehicle or the train of rail vehicles such that, if a variable (Uₛ) guided along the safety loop (40) exceeds or falls below a limit value, the permanently excited synchronous motor (6) is connected to the load circuit (32) and the friction brake (36) is enabled if required, wherein
c) the auxiliary friction brake (36) can be connected if the value of the variable (U, I) based on the speed (n) of the permanently excited synchronous motor (6) falls below a preset limit value,
d) wherein the variable based on the speed (n) of the permanently excited synchronous motor (6) is the electric current (I) flowing through the load circuit (32) or the voltage (U) induced at the terminals of the permanently excited synchronous motor (6), and wherein
e) means (42, 44, 46) are provided to ensure that a connection of the at least one friction brake (36) in dependence on the at least one value (U, I) based on the speed (n) of the permanently excited synchronous motor (6) in order to add to the braking action of the permanently excited synchronous motor (6) is possible only after at least one time (Δt) required for the build-up of a maximum possible braking torque (M) with respect to the respective speed (n) by the permanently excited synchronous motor (6) has elapsed.

2. Drive and brake system of a rail vehicle or a train of rail vehicles, comprising a traction drive (1) for driving and generator braking, wherein at least one permanently excited synchronous motor (6) and a traction current converter (4) are assigned to at least one axle of the rail vehicle or train of rail vehicles and wherein the traction current converter (4) comprises at least one machine-side pulse current converter (22) and the permanently excited synchronous motor (6) is at its terminals connected to a change-over switch (30) such that the permanently excited synchronous motor (6) is connected to the pulse current converter (22) for drive or to a load circuit (32) comprising at least one load element (28) for generator braking, wherein in the generator braking process at least one friction brake (36) is additionally enabled or disabled in dependence on the value of at least one variable (U, I) based on the speed (n) of the permanently excited synchronous motor (6), **characterised in that**
a) the generator brake forms, by way of the permanently excited synchronous motor (6) and, if required, the connected friction brake (36), a safety or emergency brake placed under a service brake as a protection level,
b) the generator brake (8) and the friction brake (36) interact with a safety loop (40) of the rail vehicle or the train of rail vehicles such that, if a variable (Uₛ) guided along the safety loop (40) exceeds or falls below a limit value, the permanently excited synchronous motor (6) is connected to the load circuit (32) and the friction brake (36) is enabled if required, wherein
c) the braking action of the at least one friction brake (36) can be connected if the value of the variable (U, I) based on the speed (n) of the permanently excited synchronous motor (6) falls into a preset interval, wherein
d) the variable based on the speed (n) of the permanently excited synchronous motor (6) is the electric current (I) flowing through the load circuit (32) or the voltage (U) induced at the terminals of the permanently excited synchronous motor (6), and wherein
e) means (42, 44, 46) are provided to ensure that a connection of the at least one friction brake (36) in dependence on the at least one value (U, I) based on the speed (n) of the permanently excited synchronous motor (6) in order to add to the braking action of the permanently excited synchronous motor (6) is possible only after at least one time (Δt) required for the build-up of a maximum possible braking torque (M) with respect to the respective speed (n) by the permanently excited synchronous motor (6) has elapsed.

3. Drive and brake system according to claim 2, **characterised in that** the interval for the variable (U, I) based on the speed (n) lies below a value (U_{Mmax}) of the variable (U, I) based on this speed (n_{Mmax}), to which a maximum value (Mₘₐₓ) of the braking torque (M) generated by the permanently excited synchronous motor (6) is assigned.

4. Drive and brake system of a rail vehicle or a train of rail vehicles, comprising a traction drive (1) for driving and generator braking, wherein at least one permanently excited synchronous motor (6) and a traction current converter (4) are assigned to at least one axle of the rail vehicle or train of rail vehicles and wherein the traction current converter (4) comprises at least one machine-side pulse current converter (22) and the permanently excited synchronous motor (6) is at its terminals connected to a change-over switch (30) such that the permanently excited synchronous motor (6) is connected to the pulse current converter (22) for drive or to a load circuit (32) comprising at least one load element (28) for generator braking, wherein in the generator braking process at least one friction brake (36) is additionally enabled or disabled in dependence on the value of the speed (n) of the permanently excited synchronous motor (6) and/or on the value of at least one variable (U, I) based on the speed (n) of the permanently excited synchronous motor (6), **characterised in that**
a) the generator brake forms, by way of the permanently excited synchronous motor (6) and, if required, the connected friction brake (36), a safety or emergency brake placed under a service brake as a protection level,
b) the generator brake (8) and the friction brake (36) interact with a safety loop (40) of the rail vehicle or the train of rail vehicles such that, if a variable (Uₛ) guided along the safety loop (40) exceeds or falls below a limit value, the permanently excited synchronous motor (6) is connected to the load circuit (32) and the friction brake (36) is enabled if required,
c) the auxiliary friction brake (36) can be connected if the value of the speed (n) of the permanently excited synchronous motor (6) or the value of the variable (U, I) based on the speed (n) of the permanently excited synchronous motor (6) falls below a preset limit value, wherein
d) the variable based on the speed (n) of the permanently excited synchronous motor (6) is the electric current (I) flowing through the load circuit (32) or the voltage (U) induced at the terminals of the permanently excited synchronous motor (6), and wherein
e) means (42, 44, 46) are provided to ensure that a connection of the at least one friction brake (36) in dependence on the value of the speed (n) of the permanently excited synchronous motor (6) or on the at least one value (U, I) based on the speed (n) of the permanently excited synchronous motor (6) in order to add to the braking action of the permanently excited synchronous motor (6) is possible only after at least one time (Δt) required for the build-up of a maximum possible braking torque (M) with respect to the respective speed (n) by the permanently excited synchronous motor (6) has elapsed.

5. Drive and brake system according to any of the preceding claims, **characterised in that** the at least one friction brake (36) is an electro-pneumatic, electro-hydraulic, electro-mechanical, pneumatic, mechanical or hydraulic friction brake.

## Revendications

1. Système d'entraînement et de freinage d'un véhicule ferroviaire ou d'un train de véhicules ferroviaires, comportant un entraînement (1) de traction pour l'entraînement et pour le freinage en génératrice, au moins un moteur (6) synchrone à excitation permanente et un convertisseur (4) de traction étant associés à au moins un essieu du véhicule ferroviaire ou du train de véhicules ferroviaires et le convertisseur (4) de traction comportant au moins un convertisseur (22) à impulsion côté machine et le moteur (6) synchrone à excitation permanente étant relié à ses bornes à un commutateur (30), de telle manière que le moteur (6) synchrone à excitation permanente soit branché, pour l'entraînement, au convertisseur (22) à impulsion ou, pour le freinage en génératrice, à un circuit (32) de charge, comportant au moins un élément (28) de charge, en plus, au moins un frein (36) à friction étant activé ou désactivé lors du freinage en génératrice, en fonction de la valeur d'au moins une grandeur (U, I) basée sur la vitesse (n) de rotation du moteur (6) synchrone à excitation permanente, **caractérisé en ce que**
a) le freinage en génératrice par le moteur (6) synchrone à excitation permanent et, si besoin est, par le frein (36) à friction branché, forme un frein de sécurité ou d'urgence, qui est subordonné, en tant que niveau de sécurisation, à un frein de service,
b) le frein (8) en génératrice et le frein (36) à friction coopèrent avec une boucle (40) de sécurité du véhicule ferroviaire ou du train de véhicules ferroviaires de telle façon que, après dépassement ou passage au-dessous d'une valeur seuil par une grandeur (Uₛ), envoyée le long de la boucle (40) de sécurité, le moteur (6) synchrone à excitation permanente soit branché sur le circuit (32) de charge et, en cas de besoin, le frein (36) à friction soit activé,
c) le frein (36) à friction supplémentaire peut être branché, si la valeur de la grandeur (U, I), basée sur la vitesse (n) de rotation du moteur (6) synchrone à excitation permanente passe au-dessous d'une valeur seuil prédéterminée,
d) la grandeur basée sur la vitesse (n) de rotation du moteur (6) synchrone à excitation permanente est le courant (I) électrique passant dans le circuit (32) de charge et/ou la tension (U) induite aux bornes du moteur (6) synchrone à excitation permanente, et
e) il est prévu des moyens (42, 44, 46), par lesquels un branchement, dépendant de la valeur de la au moins une grandeur (U, I) basée sur la vitesse (n) de rotation du moteur (6) synchrone à excitation permanente, du au moins un frein (36) à friction ne peut s'effectuer, pour l'effet de freinage du moteur (6) synchrone à excitation permanente, que s'il s'est écoulé au moins une durée (Δt), dont le moteur (6) synchrone à excitation permanente a besoin pour l'établissement d'un couple (M) de freinage le plus grand possible, rapporté à la vitesse (n) de rotation respective.

2. Système d'entraînement et de freinage d'un véhicule ferroviaire ou d'un train de véhicules ferroviaires, comportant un entraînement (1) de traction pour l'entraînement et pour le freinage en génératrice, au moins un moteur (6) synchrone à excitation permanente et un convertisseur (4) de traction étant associés à au moins un essieu du véhicule ferroviaire ou du train de véhicules ferroviaires et le convertisseur (4) de traction comportant au moins un convertisseur (22) à impulsion côté machine et le moteur (6) synchrone à excitation permanente étant relié à ses bornes à un commutateur (30), de telle manière que le moteur (6) synchrone à excitation permanente soit branché, pour l'entraînement, au convertisseur (22) à impulsion ou, pour le freinage en génératrice, à un circuit (32) de charge comprenant au moins un élément (28) de charge, en plus au moins un frein (36) à friction étant activé ou désactivé lors du freinage en génératrice en fonction de la valeur d'au moins une grandeur (U, I) basée sur la vitesse (n) de rotation du moteur (6) synchrone à excitation permanente, **caractérisé en ce que**
a) le freinage en génératrice forme, par le moteur (6) synchrone à excitation permanente et, le cas échéant, par le frein (36) à friction branché, un frein de sécurité d'urgence, qui, en niveau de sécurité, est en dessous d'un frein de service,
b) le frein (8) en génératrice et le frein (36) à friction coopérent avec une boucle (40) de sécurité du véhicule ferroviaire ou du train de véhicules ferroviaires, de telle manière que, après dépassement ou passage au-dessous d'une valeur seuil par une grandeur (Uₛ), envoyée le long de la boucle (40) de sécurité, le moteur (6) synchrone à excitation permanente soit branché sur le circuit (32) de charge et, le cas échéant, le frein (36) à friction soit activé,
c) l'effet de freinage du au moins un frein (36) de friction peut être branché si la valeur de la grandeur (U, I), basée sur la vitesse (n) de rotation du moteur (6) synchrone à excitation permanente tombe dans un intervalle prédéterminé,
d) la grandeur basée sur la vitesse (n) de rotation du moteur (6) synchrone à excitation permanente est le courant (I) électrique passant dans le circuit (32) de charge et/ou la tension (U) induite aux bornes du moteur (6) synchrone à excitation permanente, et
e) il est prévu des moyens (42, 44, 46), par lesquels un branchement, dépendant de la valeur de la au moins une grandeur (U, I) basée sur la vitesse (n) de rotation du moteur (6) synchrone à excitation permanente, du au moins un frein (36) à friction, ne peut s'effectuer, pour l'effet de friction du moteur (6) synchrone à excitation permanente, que s'il s'est écoulé au moins une durée (Δt), dont le moteur (6) synchrone à excitation permanente a besoin pour l'établissement d'un couple (M) de freinage le plus grand possible rapporté à la vitesse (n) de rotation respective.

3. Système d'entraînement et de freinage suivant la revendication 2, **caractérisé en ce que** l'intervalle pour la grandeur (U, I) basée sur la vitesse (n) de rotation est inférieur à une valeur (U_{Mmax}) de la grandeur (U, I) basée sur cette vitesse (M_{Mmax}) de rotation, à laquelle est associée une valeur (Mₘₐₓ) maximum du couple (M) de freinage produit par le moteur (6) à excitation permanente.

4. Système d'entraînement et de freinage d'un véhicule ferroviaire ou d'un train de véhicules ferroviaires, comportant un entraînement (1) de traction pour l'entraînement et pour le freinage en génératrice, au moins un moteur (6) synchrone à excitation permanente et un convertisseur (4) de traction étant associé à au moins un essieu du véhicule ferroviaire ou du train de véhicules ferroviaires, et le convertisseur (4) de traction comportant un convertisseur (22) à impulsion côté machine et le moteur (6) synchrone à excitation permanente étant relié à ses bornes à un commutateur (30), de telle manière que le moteur (6) synchrone à excitation permanente soit branché, pour l'entraînement, au convertisseur (22) à impulsion ou, pour le freinage en génératrice, à un circuit (32) de charge comprenant au moins un élément (28) de charge, de plus au moins un frein (36) à friction étant activé ou désactivé lors du freinage en génératrice, en fonction de la valeur de la vitesse (n) de rotation du moteur (6) synchrone à excitation permanente et/ou de la valeur d'au moins une grandeur (U, I) basée sur la vitesse (n) de rotation du moteur (6) synchrone à excitation permanente, **caractérisé en ce que**
a) le freinage en génératrice par le moteur (6) à excitation permanente et, le cas échéant, par le frein (36) de friction branché, forme un frein de sécurité ou d'urgence, qui, en niveau de sécurité, est en-dessous d'un frein de service,
b) le frein (8) en génératrice et le frein (36) à friction coopérant avec une boucle (40) de sécurité du véhicule ferroviaire ou du train de véhicules ferroviaires, de telle manière que, après dépassement ou passage au-dessous d'une valeur seuil par une grandeur (Uₛ), envoyée le long de la boucle (40) de sécurité, le moteur (6) synchrone à excitation permanente soit branché sur le circuit (32) de charge et, le cas échéant, le frein (36) à friction soit activé,
c) le frein (36) de friction supplémentaire peut être branché si la valeur de la vitesse (n) de rotation du moteur (6) synchrone à excitation permanente ou la valeur de la grandeur (U, I) basée sur la vitesse (n) de rotation du moteur (6) synchrone à excitation permanente dépasse une valeur seuil prédéterminée,
d) la grandeur basée sur la vitesse (n) de rotation du moteur (6) synchrone à excitation permanente est le courant (I) électrique passant dans le circuit (32) de charge et/ou la tension (U) induite aux bornes du moteur (6) synchrone à excitation permanente, et
e) il est prévu des moyens (42, 44, 46), par lesquels un branchement, dépendant de la valeur de la vitesse (n) de rotation du moteur (6) synchrone à excitation permanente ou de la valeur de la au moins une grandeur (U, I) basée sur la vitesse (n) de rotation du moteur (6) synchrone à excitation permanente, du au moins un frein (36) à friction ne peut s'effectuer, pour l'effet de freinage du moteur (6) synchrone à excitation permanente, que s'il s'est écoulé une durée (Δt) dont a besoin le moteur (6) synchrone à excitation permanente pour l'établissement d'un couple (M) de freinage le plus grand possible rapporté à la vitesse (n) de rotation.

5. Système d'entraînement et de freinage suivant l'une des revendications précédentes, **caractérisé en ce que** le au moins un frein (36) à friction comprend un frein à friction électropneumatique, électrohydraulique, électromécanique, pneumatique, mécanique ou hydraulique.
